# EUROPÄISCHE PATENTSCHRIFT

(11) **EP 2 151 377 B1**
(45) Veröffentlichungstag und Bekanntmachung des Hinweises auf die Patenterteilung: **31.08.2016**
(21) Anmeldenummer: 09009771.8
(22) Anmeldetag: 29.07.2009
(51) Int. Cl.: B63G 8/08, B08B 5/00, B08B 9/08, H01M 8/06

(54) **Verfahren zum Spülen zumindest eines Teils einer Antriebsanlage eines Fahrzeugs**
Method for flushing at least one part of a vehicle's propulsion system
Procédé de rinçage d'au moins un élément d'une installation de propulsion d'un véhicule

(30) Priorität: 08.08.2008 DE 102008037034
(43) Veröffentlichungstag der Anmeldung: 10.02.2010
(73) Patentinhaber: ThyssenKrupp Marine Systems GmbH, 24143 Kiel (DE)
(72) Erfinder: Krummrich, Stefan, Dipl.-Ing., 24634 Padenstedt (DE); Hauschildt, Peter, Dipl.-Ing., 24109 Melsdorf (DE); Mechsner, Alfred, Dipl.-Ing., 24148 Kiel (DE); Pein, Marc, Dipl.-Ing., 24147 Kiel (DE)
(74) Vertreter: ThyssenKrupp Intellectual Property GmbH

(56) Entgegenhaltungen:
- WO-A1-02/058206
- WO-A2-2006/123127
- DE-A1- 19 754 706
- FR-A1- 2 828 012

## Beschreibung

Die Erfindung betrifft ein Verfahren zum Spülen zumindest eines Teils einer außenluftunabhängigen Antriebsanlage eines Unterseebootes, sowie ein Unterseeboot mit einer außenluftunabhängigen Antriebsanlage.

Es zählt zum Stand der Technik, Antriebsanlagen von Fahrzeugen vor dem Starten oder nach Beendigung des Betriebes in einen sicheren Zustand zu bringen. Dazu werden die Reaktionsräume, beispielsweise die Verbrennungsräume der Antriebsanlage, mit Stickstoff gespült und somit inertisiert. Auf diese Weise kann eine Ansammlung brennbarer oder explosionsfähiger Gase oder auch die Kondensation von Wasser vermieden werden.

WO02/058206 beschreibt ein Verfahren zum Spülen zumindest eines Teils einer aussenluftunabhängigen Antriebsanlage sowie ein Unterseeboot mit einer aussenluftunabhängigen Antriebsanlage.

In der DE 197 54 706 A1 wird beschrieben, dass zur Vermeidung von Kondensationserscheinungen während des Abkühlens des Reaktors mit Stickstoff, Wasserstoff, Kohlenmonoxid, Argan, Kohlendioxid oder anderen Inertgasen gespült werden kann.

Die FR 2 828 012 A1 beschreibt eine Spülvorrichtung zum Spülen einer Umformeinheit mit einem Spülstoffstrom, der ein chemisch inertes Fluid, wie Stickstoff oder Verbrennungsabgas, sein kann.

Zum ordnungsgemäßen Spülen ist zum einen eine große Menge an Spülgas erforderlich, die entsprechend raumfüllend gelagert werden muss. Problematisch ist dies insbesondere bei Unterseebooten, bei welchen Bauraum eine knappe Ressource darstellt. Hinzu kommt, dass bei Unterseebooten im außenluftunabhängigen Betrieb das zum Spülen genutzte Spülgas aus dem Bootskörper in das umgebende Wasser ausgeblasen werden muss. Der dabei nachteilig entstehende Blasenschleier erhöht die Signatur des Unterseebootes deutlich.

Es ist daher Aufgabe der Erfindung, ein verbessertes Verfahren zur Inertisierung eines Teils einer Antriebsanlage eines Fahrzeugs, insbesondere einer außenluftunabhängigen Antriebsanlage eines Unterseebootes zu schaffen, welches ohne die aufgeführten Nachteile durchgeführt werden kann. Ferner ist es Aufgabe der Erfindung, ein Unterseeboot mit einer außenluftunabhängigen Antriebsanlage zu schaffen, welches eine Anlage zur Durchführung dieses verbesserten Verfahrens aufweist.

Diese Aufgabe wird durch ein Verfahren mit den in Anspruch 1 angegebenen Merkmalen sowie durch ein Unterseeboot mit den in Anspruch 8 angegebenen Merkmalen gelöst. Vorteilhafte Weiterbildungen der Erfindung ergeben sich aus den Unteransprüchen, der nachfolgenden Beschreibung und der Zeichnungen.

Das erfindungsgemäße Verfahren dient zum Spülen zumindest eines Teils einer außenluftunabhängigen Antriebsanlage eines Unterseebootes. Als Spülgas wird gemäß der Erfindung Kohlendioxid eingesetzt. Hierbei wird das Spülgas nach dem Spülen in Wasser gelöst und dann aus dem Unterseeboot in die Umgebung ausgebracht. Kohlendioxid stellt dabei ähnlich wie Stickstoff ein wirkungsvolles Inertgas dar. Verglichen mit Stickstoff besitzt Kohlendioxid eine erheblich bessere Löslichkeit in Wasser. Daher muss das zum Spülen gebrauchte Kohlendioxid nicht aus dem Bootskörper in das umgebende Wasser geblasen werden, sondern kann zunächst in Wasser gelöst und dann ausgebracht werden. Dabei ist es für das erfindungsgemäße Verfahren nicht erforderlich, dass das Kohlendioxid für die Spülung in hochreiner Form vorliegt. Es können dem Spülgas weitere Gase beigemischt sein, soweit dadurch die inertisierenden Eigenschaften des Kohlendioxids nicht beeinträchtigt werden. Die Verwendung von Kohlendioxid als Spülgas bietet dabei gegenüber der Verwendung von Stickstoff wesentliche Vorteile. Ein erster Vorteil besteht darin, dass Kohlendioxid im Vergleich zu Stickstoff in einem wesentlich kleineren Volumen gespeichert werden kann. Für außenluftunabhängige Antriebsanlagen von Unterseebooten ergibt sich daneben der weitere Vorteil, dass Kohlendioxid signaturarm aus dem Bootskörper ausgebracht werden kann, insbesondere ohne Blasenschleier zu verursachen.

Bevorzugt wird bei dem Verfahren das Spülgas vor dem Spülen in flüssigem Zustand gespeichert. Vorteilhaft geht Kohlendioxid bei Raumtemperatur bereits bei Speicherung unter einem vergleichsweise geringen Druck in den flüssigen Zustand über. Im flüssigen Zustand aber nimmt Kohlendioxid ein deutlich geringeres Volumen als im gasförmigen Zustand ein. Während Stickstoff als Spülgas bei gleichen Temperaturen typischerweise gasförmig gespeichert werden muss, kann das für Kohlendioxid erforderliche Speichervolumen durch die Speicherung im flüssigen Zustand deutlich reduziert werden.

Ferner kann eine Reduzierung des erforderlichen Speichervolumens auch durch eine Überführung des Spülgases in den überkritischen Zustand erfolgen. Daher wird weiter bevorzugt das Spülgas vor dem Spülen in überkritischem Zustand gespeichert.

Grundsätzlich kann das Kohlendioxid vollständig in flüssiger Form gespeichert werden. Ebenso ist es möglich, das Spülgas vor dem Spülen in gasförmigem Zustand zu speichern. Eine Begrenzung des Lagervolumens bzw. des Betriebsdrucks gelingt jedoch insbesondere bei einer Speicherung des Kohlendioxids in einem Gleichgewicht aus flüssigem und gasförmigem Zustand. In diesem Falle kann das Spülgas entweder im gasförmigen oder im flüssigen Zustand aus dem Gleichgewicht entnommen und nachfolgend zur Spülung genutzt werden.

Das erfindungsgemäße Verfahren lässt sich dabei zum Spülen einer Vielzahl unterschiedlicher Antriebsanlagen einsetzen. Bevorzugt wird das Verfahren zum Spülen einer Reformeranlage eines Reformer-Brennstoffzellensystems eingesetzt. Dabei wird das Kohlendioxid in den Reaktionsraum des Reformers eingeleitet. Dort verhindert das eingeleitete Kohlendioxid einerseits wirksam die Ansammlung brennbarer oder explosionsfähiger Gasgemische. Andererseits wird über eine Kohlendioxidspülung nach dem Betrieb der Anlage eine Kondensation von Wasser innerhalb des Reformers und damit eine Beeinträchtigung (z. B. Korrosion) der Anlage vermieden. In einer bevorzugten Weiterbildung des Verfahrens ist es zweckmäßig, auch die Brennstoffzellenanlage des Reformer-Brennstoffzellensystems mit Kohlendioxid zu spülen.

In einer weiteren bevorzugten Ausgestaltung kann das erfindungsgemäße Verfahren auch zum Spülen zumindest eines Teils eines Stirling-Systems, eines Kreislauf-Dampfturbinen-Systems oder eines Dieselmotors in einem Kreislaufsystem eingesetzt werden. So beinhaltet ein Stirlingmotor häufig eine Wärmequelle, um eine Temperaturdifferenz aufrecht zu erhalten. Diese Wärmequelle wird regelmäßig durch eine Kraftstoffverbrennungseinheit realisiert. Diese Kraftstoffverbrennungseinheit bildet einen Teil der Antriebsanlage, welcher gemäß dieser Ausgestaltung des Verfahrens mit dem Spülgas gespült wird. Auch zum Spülen der Verbrennungsräume eines Dieselmotors in einem Kreislaufsystem und eines Kreislauf-Dampfturbinen-Systems ist diese Weiterbildung des erfindungsgemäßen Verfahrens einsetzbar.

Ein zusätzlicher Vorteil beim Spülen einer Antriebsanlage mit Kohlendioxid besteht darin, dass die Bildung hochkorrosiver Säuren, wie sie beim Spülen mit Stickstoff auftreten können, verhindert werden kann. Wird eine Antriebsanlage zum Beispiel kurz nach ihrer Benutzung gespült, so können Teile der Antriebsanlage noch deutlich erhöhte Temperaturen aufweisen. An diesen heißen Bereichen kann Stickstoff mit Sauerstoff oxidieren, wobei u.a. Salpetersäure entstehen kann. Das Spülen mit Kohlendioxid hingegen schließt die Bildung ähnlich korrosiver Säuren aus.

In einer bevorzugten Weiterbildung des Verfahrens wird Kohlendioxid des Abgases der Antriebsanlage als Spülgas eingesetzt. Dabei enthält zum einen das Abgas von auf Verbrennung beruhenden Antriebsanlagen, wie Stirling-Systemen, Kreislauf-Dampfturbinen-Systemen und Dieselkreislaufsystemen gewöhnlich Kohlendioxid. Zum anderen gast aber auch ein Reformer eines Reformer-Brennstoffzellensystems Kohlendioxid ab, wenn dieser den Brennstoff, etwa Wasserstoff, für die Brennstoffzelle produziert. Durch die Nutzung des Kohlendioxids des Abgases kann der Spülgasspeicher besonders klein gehalten werden, da im Extremfall lediglich für einen einzigen Spülvorgang Spülgas bereitgehalten werden muss. Ferner erhöht auf diese Weise das Spülgas weder die Signatur des Unterseebootes noch die Menge an im Wasser zu lösenden Kohlendioxid, da das eingesetzte Spülgas ohnehin beim Betrieb der Antriebsanlage als Abgas anfällt.

Das erfindungsgemäße Unterseeboot mit einer außenluftunabhängigen Antriebsanlage weist eine Kohlendioxidspülgasanlage zur Durchführung dieses Verfahrens auf. Die Kohlendioxidspülgasanlage weist dabei zumindest einen Kohlendioxidspeicher auf. Mit der Kohlendioxidspülgasanlage wird das Verfahren dergestalt umgesetzt, dass das Kohlendioxid des Kohlendioxidspeichers von der Kohlendioxidspülgasanlage zu dem zu spülenden Teil der Antriebsanlage geführt wird und die Kohlendioxidspülgasanlage das Spülen dieses Teils durchführt.

Bevorzugt weist das Unterseeboot Mittel zur Verflüssigung bzw. zur Überführung in den überkritischen Zustand zumindest eines Teils des von der Antriebsanlage abgegasten Kohlendioxids auf. Dementsprechend kann mit dieser Ausführungsform ein Teil des von der Antriebsanlage abgegasten Kohlendioxids verflüssigt bzw. in den überkritischen Zustand überführt werden und nachfolgend zum Spülen der Antriebsanlage eingesetzt werden. Folglich wird der Bedarf an mitzuführendem Kohlendioxid und damit das benötigte Speichervolumen weiter verringert sowie die Menge des in Wasser zu lösenden Kohlendioxids begrenzt, da ein Teil des Abgases zum Spülen wiederverwertet wird.

In einer weiteren bevorzugten Ausführungsform ist bei dem Unterseeboot der Kohlendioxidspeicher außerhalb des Druckkörpers des Unterseeboots angeordnet. Auf diese Weise ist Wärmeenergie des praktisch unbegrenzt zur Verfügung stehenden umgebenden Seewassers zur Verdampfung flüssigen Kohlendioxids nutzbar. Beispielsweise kann das Kohlendioxid in einem Gleichgewicht von flüssigem und gasförmigem Zustand gespeichert sein. Die Entnahme gasförmigen Kohlendioxids aus diesem Gleichgewicht führt dann zu einer Druckerniedrigung im Kohlendioxidtank, sodass das flüssige Kohlendioxid zu sieden beginnt. Der Wärmeeintrag in dem Kohlendioxidtank durch das Seewasser kann nun eine Abkühlung des Kohlendioxids unter die Siedetemperatur verhindern. Somit kann gasförmiges Kohlendioxid bis zur vollständigen Entleerung des Speichers entnommen werden. Bevorzugt ist der Kohlendioxidtank daher gegenüber dem Seewasser nicht wärmeisoliert.

Ferner bevorzugt weist das Unterseeboot Leitungen zum Zu- und Abführen des Spülgases zur und von der zu spülenden Antriebsanlage, Steuermittel und Mittel zum Lösen des gebrauchten Spülgases im Wasser und zum Ausbringen des Wassers aus dem Unterseeboot auf. Damit kann einerseits das Spülgas zur Antriebsanlage geführt werden. Andererseits kann das zum Spülen gebrauchte Spülgas von der Antriebsanlage abgeführt, im Wasser gelöst und anschließend aus dem Unterseeboot blasenfrei ausgebracht werden. Entsprechend weist das Unterseeboot in dieser Weiterbildung auch bei oder nach einem Spülvorgang der Antriebsanlage keinen Blasenschleier und daher eine kaum erhöhte Signatur auf.

Die Erfindung ist nachfolgend anhand eines in der Zeichnung dargestellten Ausführungsbeispiels beschrieben. Es zeigen:
- Fig. 1: ein erfindungsgemäßes Unterseeboot mit einer außenluftunabhängigen Antriebsanlage sowie einer Kohlendioxidspülgasanlage zur Durchführung des erfindungsgemäßen Verfahrens in einem Blockschaltbild,
- Fig. 2: ein Blockschaltbild eines Teils der Kohlendioxidspülgasanlage gemäß Fig. 1 in einer ersten Ausführungsform und
- Fig. 3: ein Blockschaltbild eines Teils der Kohlendioxidspülgasanlage gemäß Fig. 1 in einer zweiten Ausführungsform.

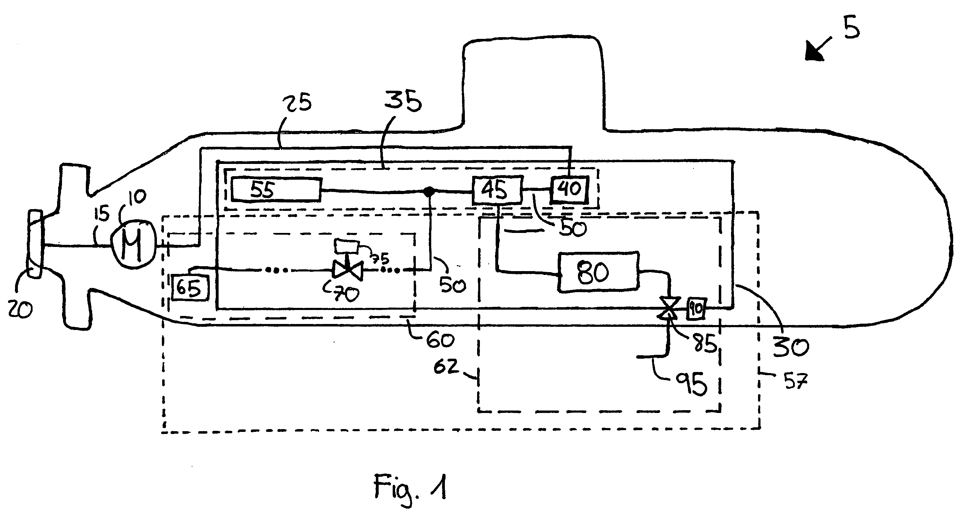

Das in Fig. 1 dargestellte Unterseeboot 5 wird mittels eines elektrischen Motors 10 elektrisch angetrieben, der über eine Welle 15 einen Propeller 20 in Drehung versetzt. Der Motor 10 wird dazu über das Fahrnetz 25 von einer innerhalb des Druckkörpers 30 des Unterseebootes 5 befindlichen Antriebsanlage 35 angetrieben. Die Antriebsanlage 35 weist im Wesentlichen eine Brennstoffzellenanlage 40 auf, welche die erzeugte elektrische Energie in das Fahrnetz 25 einspeist. Die Brennstoffzellenanlage 40 erhält ihren Brennstoff von einem Reformer 45, welcher den Brennstoff über eine Fluidleitung 50 bereitstellt. Der Reformer 45 ist zur Produktion des Brennstoffs über eine Fluidleitung 50 mit einem Kraftstofftank 55 verbunden, aus welchem der Reformer 45 Kraftstoff bezieht. Der Kraftstoff wird durch den Reformer 45 in den Brennstoff der Brennstoffzellenanlage 40 umgewandelt.

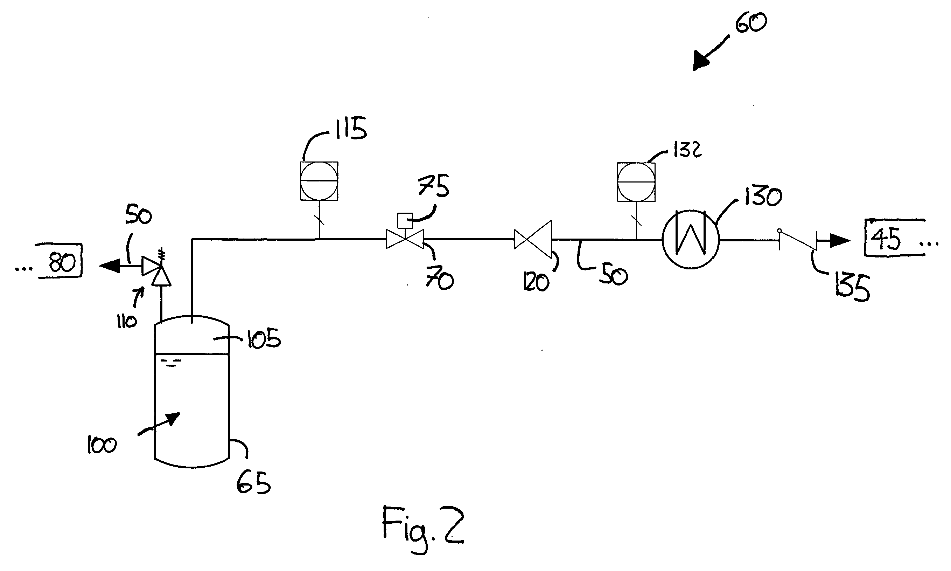

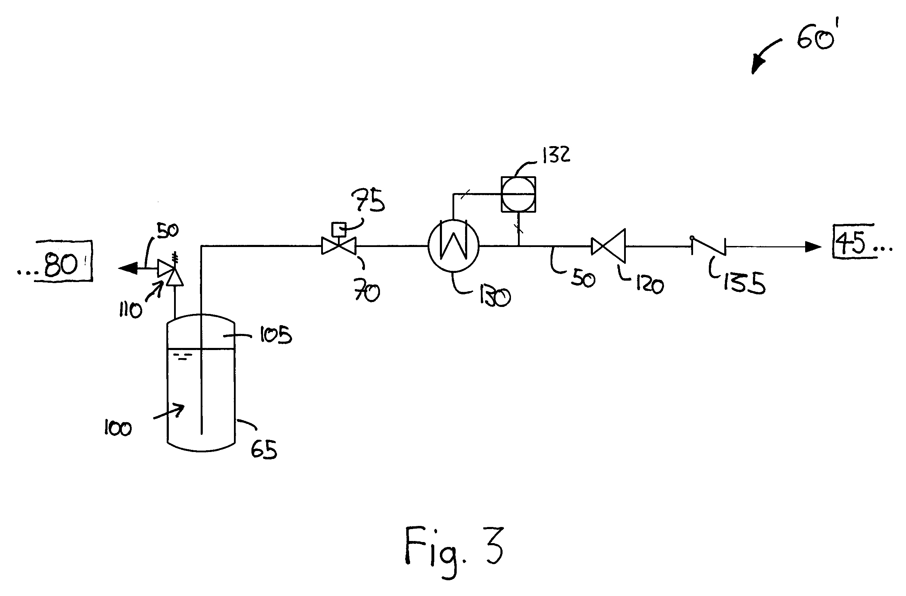

Vor dem Starten bzw. nach Beendigung des Betriebes der Antriebsanlage 35 wird der Reformer 45 mit Kohlendioxid als inertem Spülgas gespült. Dazu weist das Unterseeboot 5 eine Kohlendioxidspülgasanlage 57 auf, welche eine Spülgasversorgung 60 und eine Spülgasentsorgung 62 umfasst. Die Spülgasversorgung 60 weist einen Kohlendioxidspeicher 65 auf, in welchem das zum Spülen des Reformers 45 zu nutzende Kohlendioxid gespeichert ist. Zum Spülen ist der Kohlendioxidspeicher 65 mit dem Reformer 45 über eine Fluidleitung 50 verbunden, über die der Reaktionsraum des Reformers 45 mit Kohlendioxid beschickt werden kann. Das Spülen kann dabei über ein Ventil 70 gestartet und beendet werden. Dazu ist das Ventil 70 mit einer Steuereinheit 75 verbunden. Daneben weist die Spülgasversorgung 60 weitere Komponenten auf, die anhand der Fig. 2 und 3 weiter unten erläutert werden.

Die Spülgasentsorgung 62 der Kohlendioxidspülgasanlage 57 beinhaltet einen Mischer 80 zum Lösen des gebrauchten Spülgases im Wasser. Der Mischer 80 ist mit dem Reformer 45 über eine Fluidleitung 50 verbunden, durch welche das zum Spülen des Reformers 45 genutzte Kohlendioxid zum Mischer 80 geführt wird. Der Mischer 80 vermischt das zum Spülen genutzte Kohlendioxid mit Seewasser, sodass es sich im Seewasser löst. Die Seewasser-Kohlendioxid-Lösung kann über das Auslassventil 85, welches mit einer Steuereinheit 90 verbunden ist, in eine Leitung 95 ausgelassen werden. Über die Leitung 95 wird die Seewasser-Kohlendioxid-Lösung außerhalb des Unterseebootes 5 in das umgebende Seewasser ausgebracht.

Eine mögliche Ausgestaltung der Spülgasversorgung 60 einer Kohlendioxidspülgasanlage 57 ist in Fig. 2 gezeigt. Der Kohlendioxidspeicher 65 ist in diesem Ausführungsbeispiel als ein Flüssiggastank ausgebildet, in welchem flüssiges 100 und gasförmiges 105 Kohlendioxid im Gleichgewicht stehen. In der gezeigten Ausführungsform ist ein Ende der Fluidleitung 50 derart im Kohlendioxidtank 65 angeordnet, dass zum Spülen des Reformers 45 gasförmiges Kohlendioxid 105 aus dem Kohlendioxidtank 65 entnommen werden kann. Daneben ist eine zweite Fluidleitung 50 an den Kohlendioxidtank 65 angeschlossen, die den Kohlendioxidtank 65 über ein Sicherheitsventil 110 mit dem Mischer 80 verbindet (in Fig. 1 nicht gezeigt). Auf diese Weise kann ein Überdruck im Kohlendioxidtank 65 vermieden werden, indem der Druck durch Ableitung gasförmigen Kohlendioxids in den Mischer 80 verringert wird. Darüber hinaus wird der Druck in der Fluidleitung 50 mittels eines Drucksensors 115 als Teil einer Druckmesseinrichtung überwacht. Das nachfolgende Ventil 70 wird zur Spülung des Reformers 45 über die Steuereinheit 75 öffnend gestellt.

Das gasförmige Kohlendioxid gelangt zunächst durch einen Druckminderer 120, mittels welchem der Gasdruck des Kohlendioxids auf einen geeigneten Spüldruck reduziert wird. Bei einer zu starken Reduzierung des Kohlendioxiddrucks durch den Druckminderer 120 kann es jedoch zu einer Kondensation von Kohlendioxid kommen. Um eventuell vorhandenes flüssiges Kohlendioxid nachzuverdampfen, ist hinter dem Druckminderer 120 ein Verdampfer 130 angeordnet. Auf diese Weise ist gewährleistet, dass zum Spülen lediglich gasförmiges Kohlendioxid zum Reformer gelangt. Die Temperatur des Kohlendioxids vor dem Verdampfer 130 wird dabei mittels eines Temperatursensors 132 als Teil einer Temperaturmesseinrichtung überwacht. Anstelle des gezeigten Verdampfers 130 kann auch ein Vorwärmtank (nicht in der Zeichnung dargestellt) eingesetzt werden, in welchem das nach Druckminderung kondensierte Kohlendioxid abgeschieden, gesammelt und nachverdampft wird. Die Fluidleitung 50 weist zwischen Verdampfer 130 und Reformer 45 ein Rückschlagventil 135 auf, welches eine Rückströmung von Gas aus dem Reaktionsraum des Reformers 45 verhindert.

Durch die Entnahme gasförmigen Kohlendioxids 105 aus dem Kohlendioxidtank 65 sinkt in diesem der Druck. Entsprechend beginnt das flüssige Kohlendioxid 100 zu sieden. Dieser Vorgang endet erst bei vollständiger Entleerung des Kohlendioxidtanks 65 bzw. bei Unterschreitung der Siedetemperatur. Auch aus diesem Grund ist der Kohlendioxidtank 65 außerhalb des Druckkörpers 30 im Unterseeboot 5 angeordnet, sodass der Wärmeeintrag durch das umgebende Seewasser zur Überführung des Kohlendioxids in die gasförmige Phase genutzt wird. Zu diesem Zweck ist der Kohlendioxidtank 65 nicht wärmeisoliert. Die fehlende Isolierung des Kohlendioxidtanks 65 verhindert dabei eine zu starke Abkühlung im Kohlendioxidtank 65, die daraus resultiert, dass das flüssige Kohlendioxid 100 nach der Gasentnahme durch Sieden abkühlt. Nicht dargestellt sind Mittel, die eine Gasentnahme auch bei Bewegung des Unterseebootes erlauben. So verhindert etwa eine sogenannte Wasserfalle, dass flüssiges Kohlendioxid 100 aus dem Kohlendioxidtank 65 bis zum Druckminderer 120 gelangt.

Fig. 3 zeigt eine weitere Ausführungsform einer Spülgasversorgung 60' einer Kohlendioxidspülgasanlage 57. Auch in dieser gezeigten Ausführungsform wird das Kohlendioxid in einem Gleichgewicht aus flüssiger 100 und gasförmiger Phase 105 in einem Kohlendioxidtank 65 gespeichert. Im Unterschied zur vorangegangenen Ausführungsform wird in diesem Beispiel das Kohlendioxid im flüssigen Zustand 100 aus dem Kohlendioxidtank 65 entnommen. Die Fluidleitungen 50 können dabei eine höhere Temperatur als das flüssige Kohlendioxid 100 aufweisen. Daher kann das Kohlendioxid bereits in den Fluidleitungen 50 in den gasförmigen Zustand 105 überführt werden. Der Druck des gasförmigen Kohlendioxids wird wie im vorangegangen Beispiel mittels eines Druckminderers 120 an den Spüldruck angepasst. Um eine Kondensation des Kohlendioxids nach Druckminderung durch den Druckminderer 120 zu vermeiden, muss das gasförmige Kohlendioxid 105 eine hinreichend hohe Temperatur aufweisen. Dazu befindet sich in diesem Ausführungsbeispiel ein Verdampfer 130 auf einem zwischen Kohlendioxidtank 65 und Druckminderer 120 gelegenen Abschnitt der Fluidleitung 50. Die Temperatur des Kohlendioxids in bzw. nach dem Verdampfer 130 wird dabei mittels eines Temperatursensors 132 als Teil einer Temperaturmesseinrichtung überwacht.

Alternativ kann das Kohlendioxid auch im flüssigen Zustand 100 durch den Druckminderer 120 geleitet werden, wobei durch den reduzierten Druck hinter dem Druckminderer 120 die Temperatur des flüssigen Kohlendioxids 100 deutlich absinkt. In diesem Fall kann der Verdampfer 130 mit Wasser aus einem Kühlwasserkreislauf (in der Zeichnung nicht dargestellt) des Unterseebootes 5 versorgt werden, um das flüssige Kohlendioxid 100 bis zur Verdampfung zu heizen.

### Bezugzeichenliste

- 5: Unterseeboot
- 10: Motor
- 15: Welle
- 20: Propeller
- 25: Fahrnetz
- 30: Druckkörper
- 35: Außenluftunabhängige Antriebsanlage
- 40: Brennstoffzellenanlage
- 45: Reformer
- 50: Fluidleitungen
- 55: Kraftstofftank
- 57: Kohlendioxidspülgasanlage
- 60, 60': Spülgasversorgung einer Kohlendioxidspülgasanlage
- 62: Spülgasentsorgung einer Kohlendioxidspülgasanlage
- 65: Kohlendioxidtank
- 70: Ventil
- 75: Steuereinheit
- 80: Mischer
- 85: Auslassventil
- 90: Steuereinheit
- 95: Abgasausleitung
- 100: Flüssiges Kohlendioxid
- 105: Gasförmiges Kohlendioxid
- 110: Sicherheitsventil
- 115: Drucksensor
- 120: Druckminderer
- 130: Verdampfer
- 132: Temperatursensor
- 135: Rückschlagventil

## Patentansprüche

1. Verfahren zum Spülen zumindest eines Teils (45) einer außenluftunabhängigen Antriebsanlage (35) eines Unterseebootes (5), **dadurch gekennzeichnet, dass** als Spülgas Kohlendioxid eingesetzt wird und dass das Spülgas nach dem Spülen in Wasser gelöst und dann aus dem Unterseeboot (5) in die Umgebung ausgebracht wird.

2. Verfahren nach Anspruch 1, **dadurch gekennzeichnet, dass** das Spülgas vor dem Spülen im flüssigen Zustand (100) gespeichert wird.

3. Verfahren nach Anspruch 1, **dadurch gekennzeichnet, dass** das Spülgas vor dem Spülen in überkritischem Zustand gespeichert wird.

4. Verfahren nach Anspruch 1, **dadurch gekennzeichnet, dass** das Spülgas vor dem Spülen im gasförmigen Zustand gespeichert wird.

5. Verfahren nach einem der Ansprüche 1 bis 4, **dadurch gekennzeichnet, dass** es zum Spülen einer Reformeranlage (45) eines Reformer-Brennstoffzellensystems (35) eingesetzt wird.

6. Verfahren nach einem der vorhergehenden Ansprüche, **dadurch gekennzeichnet, dass** es zum Spülen zumindest eines Teils eines Stirling-Systems, eines Kreislauf-Dampfturbinen-Systems oder eines Dieselmotors in einem Kreislaufsystem eingesetzt wird.

7. Verfahren nach einem der vorhergehenden Ansprüche, **dadurch gekennzeichnet, dass** Kohlendioxid des Abgases einer Antriebsanlage (35) als Spülgas eingesetzt wird.

8. Unterseeboot (5) mit einer außenluftunabhängigen Antriebsanlage (35), **dadurch gekennzeichnet, dass** eine Kohlendioxidspülgasanlage (57) zur Durchführung des Verfahrens nach einem der vorhergehenden Ansprüche vorgesehen ist, wobei die Kohlendioxidspülgasanlage (57) zumindest einen Kohlendioxidspeicher (65) aufweist und dass Leitungen (50) zum Zu- und Abführen des Spülgases zur und von der zu spülenden Antriebsanlage (35), Steuermittel und Mittel zum Lösen (80) des gebrauchten Spülgases im Wasser und zum Ausbringen (95) des Wassers aus dem Unterseeboot (5) vorgesehen sind.

9. Unterseeboot (5) nach Anspruch 8, **dadurch gekennzeichnet, dass** Mittel zur Verflüssigung bzw. zur Überführung in den überkritischen Zustand zumindest eines Teils des von der Antriebsanlage (35) abgegasten Kohlendioxids vorgesehen sind.

10. Unterseeboot (5) nach Anspruch 8 oder 9, **dadurch gekennzeichnet, dass** der Kohlendioxidspeicher (65) außerhalb des Druckkörpers (30) des Unterseebootes (5) angeordnet ist.

## Claims

1. Method for flushing at least one part (45) of a propulsion system (35) of a submarine (5) that is independent of outside air, **characterized in that** carbon dioxide is used as the flushing gas and **in that**, after the flushing, the flushing gas is dissolved in water and then discharged from the submarine (5) into the environment.

2. Method according to Claim 1, **characterized in that**, before the flushing, the flushing gas is stored in the liquid state (100).

3. Method according to Claim 1, **characterized in that**, before the flushing, the flushing gas is stored in the supercritical state.

4. Method according to Claim 1, **characterized in that**, before the flushing, the flushing gas is stored in the gaseous state.

5. Method according to one of Claims 1 to 4, **characterized in that** it is used for flushing a reformer unit (45) of a reformer fuel-cell system (35).

6. Method according to one of the preceding claims, **characterized in that** it is used for flushing at least one part of a Stirling system, a circulating steam-turbine system or a diesel engine in a circulating system.

7. Method according to one of the preceding claims, **characterized in that** carbon dioxide from the exhaust gas of a propulsion system (35) is used as the flushing gas.

8. Submarine (5) with a propulsion system (35) that is independent of outside air, **characterized in that** a carbon-dioxide flushing gas unit (57) is provided for carrying out the method according to one of the preceding claims, the carbon-dioxide flushing gas unit (57) having at least one carbon dioxide tank (65), and **in that** lines (50) for supplying and removing the flushing gas to and from the propulsion system (35) to be flushed, control means and means for dissolving (80) the used flushing gas in the water and for discharging (95) the water from the submarine (5) are provided.

9. Submarine (5) according to Claim 8, **characterized in that** means for liquefying or transferring into the supercritical state at least one part of the carbon dioxide exhausted from the propulsion system (35) are provided.

10. Submarine (5) according to Claim 8 or 9, **characterized in that** the carbon dioxide tank (65) is arranged outside the pressure hull (30) of the submarine (5).

## Revendications

1. Procédé pour le rinçage d'au moins une partie (45) d'une installation de propulsion indépendante de l'air extérieur (35) d'un sous-marin (5), **caractérisé en ce que** l'on utilise du dioxyde de carbone comme gaz de rinçage et **en ce que** le gaz de rinçage est dissous dans l'eau après le rinçage et est évacué ensuite dans l'environnement hors du sous-marin (5).

2. Procédé selon la revendication 1, **caractérisé en ce que** le gaz de rinçage est stocké à l'état liquide (100) avant le rinçage.

3. Procédé selon la revendication 1, **caractérisé en ce que** le gaz de rinçage est stocké à l'état sur-critique avant le rinçage.

4. Procédé selon la revendication 1, **caractérisé en ce que** le gaz de rinçage est stocké à l'état gazeux avant le rinçage.

5. Procédé selon l'une quelconque des revendications 1 à 4, **caractérisé en ce que** l'on utilise pour le rinçage d'une installation de reformage (45) un système de pile à combustible de reformeur (35).

6. Procédé selon l'une quelconque des revendications précédentes, **caractérisé en ce qu'**il est utilisé pour le rinçage d'au moins une partie d'un système Stirling, d'un système de turbine à vapeur en circuit fermé ou d'un moteur diesel dans un système en circuit fermé.

7. Procédé selon l'une quelconque des revendications précédentes, **caractérisé en ce que** le dioxyde de carbone du gaz d'échappement d'une installation de propulsion (35) est utilisé en tant que gaz de rinçage.

8. Sous-marin (5) comprenant une installation de propulsion indépendante de l'air extérieur (35), **caractérisé en ce qu'**il est prévu une installation de gaz de rinçage au dioxyde de carbone (57) pour la mise en oeuvre du procédé selon l'une quelconque des revendications précédentes, l'installation de gaz de rinçage au dioxyde de carbone (57) présentant au moins un accumulateur de dioxyde de carbone (65) et **en ce que** des conduites (50) pour l'alimentation et l'évacuation du gaz de rinçage vers et depuis l'installation de propulsion à rincer (35), des moyens de commande et des moyens pour libérer (80) le gaz de rinçage utilisé dans l'eau et pour évacuer (95) l'eau hors du sous-marin (5), sont prévus.

9. Sous-marin (5) selon la revendication 8, **caractérisé en ce que** des moyens pour liquéfier ou transférer à l'état sur-critique au moins une partie du dioxyde de carbone dégazé par l'installation de propulsion (35) sont prévus.

10. Sous-marin (5) selon la revendication 8 ou 9, **caractérisé en ce que** l'accumulateur de dioxyde de carbone (65) est disposé à l'extérieur du corps de compression (30) du sous-marin (5).
